# EUROPEAN PATENT SPECIFICATION

(11) **EP 0 679 694 B1**
(45) Date of publication and mention of the grant of the patent: **05.09.2001**
(21) Application number: 95302941.0
(22) Date of filing: 28.04.1995
(51) Int. Cl.: C09B 47/04, C09D 11/00

(54) **Process for the production of copper phtalocyanine**
Verfahren zur Herstellung von Kupferphthalocyanine
Procédé de fabrication de la phtalocyanine de cuivre

(30) Priority: 28.04.1994 JP 11392794
(43) Date of publication of application: 02.11.1995
(73) Proprietor: TOYO INK MANUFACTURING CO., LTD., Tokyo (JP)
(72) Inventor: Hikosaka, Michichika, Tokyo (JP); Coispeau, Gerard, F-27400 Louviers (FR)
(74) Representative: Woods, Geoffrey Corlett

(56) References cited:
- EP-A- 0 436 311
- US-A- 5 393 339
- DATABASE WPI Section Ch, Week 8724 Derwent Publications Ltd., London, GB; Class E23, AN 87-168124 XP002041241 & JP 62 101 660 A (DAINICHISEIKA COLOR & CHEM MFG) , 12 May 1987
- DATABASE WPI Section Ch, Week 8724 Derwent Publications Ltd., London, GB; Class E23, AN 87-168123 XP002041242 & JP 62 101 659 A (DAINICHISEIKA COLOR & CHEM MFG) , 12 May 1987

## Description

The present invention relates to a process for the production of a highly pure crude copper phthalocyanine pigment useful in the fields of pigments and dyes, at high yields.

For the production of copper phthalocyanines, conventionally, there is industrially most widely employed a method in which a phthalic anhydride and/or its derivative, a copper compound and urea are heated in an inert solvent in the presence of a catalyst, and this method is known as a urea method or Wyler method.

The above urea method is industrially widely used at present. In the course of the reaction, however, none of the-mixture of raw materials, a reaction intermediate and a product is brought into a completely dissolved state. That is, the reaction proceeds in a heterogeneous state from beginning to end. Further, at the step at which the reaction intermediate is formed, the viscosity of the reaction system increases to cause an insufficient mixing, nonuniformity in heat transfer and adhesion of the reaction mixture to a reactor wall. As a result, not only the operation for the reaction is hindered, but also the purity and yield of the product are decreased.

For overcoming the above defects, there have been proposed some methods in which, for example, a solvent having a high dissolving power is used to improve the stirring of the reaction system, or a solvent is used in an amount as small as about 2 times the amount of phthalic acid to have a good effect on the reaction yield (see JP 62101659). However, the problem of the former method is that it is not sufficient to produce a good effect, and that there is some limitation to the selection of a solvent which can be easily handled. In the latter method, the reaction system shows an increase in viscosity since the amount of the solvent is small, and there is therefore a defect in that it is required to increase the stirring power and the strength of the stirring apparatus.

JP-62101659 (JP-B-5005866) discloses that the viscosity can be decreased by adding an anionic surfactant to the reaction system and that the amount of the solvent therefore can be decreased. This method can undoubtedly have a great effect on the improvement of the reaction system. However, it is well known that an anionic surfactant contained in a pigment decreases the interfacial tension between an offset printing ink and water to cause some problems such as the scumming of a printing plate, etc. It is very difficult to completely remove the anionic surfactant added to the reaction system in the subsequent steps of purification and pigment formation. Although the above method is clearly advantageous in view of the reaction step, it cannot solve all the problems when the suitability for the production of a pigment is taken into consideration.

EP-A-0436311 discloses a catalytic process for the manufacture of copper phthalocyanine.

US-A-5393339 discloses a process for preparing metal phthalocyanine pigments.

It has been and is therefore strongly desired to develop a process for producing a highly pure copper phthalocyanine at high yields by improving the state of the reaction system without decreasing the interfacial tension of the pigment or impairing the economic performance of the process.

The present inventor has made diligent studies to overcome the above problems and to accomplish the above requirements, and have found the following. When a dispersing agent of some type is added in the production of phthalocyanine by a urea method, the viscosity of the reaction system decreases, the uniformity of the reaction system increases, and the reaction proceeds smoothly to produce a copper phthalocyanine at high yields. Further, the above dispersing agent is free from decreasing the interfacial tension of the copper phthalocyanine pigment.

The present invention allows for the production of a highly pure copper phthalocyanine at high yields while improving the state of a reaction system, without decreasing the interfacial tension of a pigment to be obtained.

The present invention also allows for the production of a highly pure copper phthalocyanine at high yields by decreasing the viscosity of the reaction system, improving the uniformity of the reaction system and proceeding with the reaction smoothly.

Thus, the present invention provides a process for the production of a crude copper phthalocyanine pigment which process comprises heating phthalic acid and/or its derivative, a nitrogen source, a copper source and a catalyst in an inert solvent, wherein a dispersing agent of the formula (1) is added to the reaction system,

A-(O-R¹-CO)ₙ-B (1)

wherein A is hydrogen, a saturated or unsaturated aliphatic group having 1 to 20 carbon atoms or a polyolefin residue, R¹ is a linear or branched aliphatic residue having up to 20 carbon atoms, 0≦n≦20, and when n = 0, B is a compound of the formula (2), 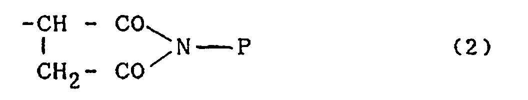 wherein P is a polyamine,
or when n ≠ 0, B is a compound of the formula (3),

-X-(Cₘ-H₂ₘ)-Q (3)

wherein X is -NH- or -O-, m is 0 to 6 and Q is -NR²R³ or -N⁺R²R³R⁴-Y⁻ in which each of R² and R³ is independently hydrogen or an aliphatic group having 1 to 6 carbon atoms or R² and R³ together form a ring containing N, R⁴ is methyl or ethyl and Y is a monovalent anion.

The invention also provides a process for preparing an ink containing as a pigment, a copper phthalocyanine, which process comprises:
(a) preparing a crude phthalocyanine pigment by a process according to any one of claims 1 to 9; and
(b) incorporating phthalocyanine pigment formed from the crude phthalocyanine pigment into an ink.

The phthalic acid and/or its derivative used in the present invention include phthalic acid, alkali metal salt, ammonium salt and organic amine salt of phthalic acid, phthalic anhydride, phthalimide, phthaldiamide, phthalodinitrile, 1,3-diaminoisoindoline and compounds which are the same as these described here except that the benzene ring is replaced with 1 to 4 halogen atoms. These compounds may be used alone or in combination.

The nitrogen source such as urea is generally used in an amount of at least 3 mol per mole of the phthalic acid and/or its derivative. Substituted urea such as biuret may be used. Further, when a phthalic acid containing no nitrogen such as phthalic acid or phthalic anhydride is used as a raw material, part of urea may be replaced with ammonia or an ammonium compound in the first imidation reaction.

The copper source used in the present invention is generally copper chloride, while it may be selected from copper salts such as a metal copper powder, copper oxide, copper sulfate and copper acetate and complexes of copper salts such as copper chloride and any one of ammonia, urea and an amine.

The catalyst used in the present invention is generally ammonium molybdate, while it may be selected from molybdenum (VI) oxide and molybdic acid. The catalyst is used in an amount, as a molybdenum content, of 0.001 to 0.02 part by weight based on the phthalic acid.

The inert solvent used in the present invention can be selected from those solvents which are conventionally used for the production of copper phthalocyanine. The inert solvent includes nitrobenzene, trichlorobenzene, chloronaphthalene, alkylbenzenes, alkylnaphthalenes and kerosenes. The amount of the inert solvent is 1 to 5 times, preferably 1.5 to 2.5 times, as large as the amount of the phthalic acid. When the amount of the inert solvent is larger than the above upper limit, the stirring can be carried out easily, while the yield of a copper phthalocyanine tends to decrease. When this amount is less than the above lower limit, the viscosity of the reaction system is too high to stir it.

The dispersing agent in the form of a polymer, which characterizes the present invention, is a compound of the formula (1),

A-(O-R¹-CO)ₙ-B (1)

wherein A is a hydrogen atom, a saturated or unsaturated aliphatic group having 1 to 20 carbon atoms or a polyolefin residue, R¹ is a linear or branched aliphatic residue having 20 carbon atoms or less, n is an integer of 0 to 20, and B is a compound of the formula (2) when n = 0, 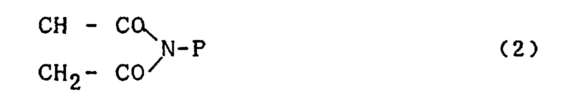 wherein P is a polyamine residue,
or a compound of the formula (3) when n ≠ 0,

-X-(Cₘ-H₂ₘ)-Q (3)

wherein X is -NH- or -O-, m is a number of 0 to 6, and Q is -NR²R³ or -N⁺.R²R³R⁴-Y⁻ in which each of R² and R³ is independently hydrogen or an aliphatic group having 1 to 6 carbon atoms or R² and R³ both form a ring containing N, R⁴ is methyl or ethyl, and Y is a monovalent anion.

The dispersing agent in the form of a polymer preferably includes:

A-(-O-CH(C₆H₁₃)C₁₀H₂₀-CO)ₙ-NH-(CₘH₂ₘ)N⁺R²R³R⁴-Y⁻

wherein A is as defined in the formula (1), n is a number in the range of 0<n≦20, and m, R², R³, R⁴ and Y⁻ are as defined in the formula (3),

A-(-O-CH(C₆H₁₃)C₁₀H₂₀-CO)ₙ-NH-(CₘH₂ₘ)NR²R³

wherein A is as defined in the formula (1), n is a number in the range of 0<n≦20, and m, R² and R³ are as defined in the formula (3), and
a compound of the formula (1) wherein A is a polyolefin residue, n is 0 and B is a compound of the formula (2).

The amount of the dispersing agent based on the reaction product is preferably approximately 0.001 to 0.15 % by weight.

The crude copper phthalocyanine pignent of the present invention can be produced under conventional production conditions and conventional post-treatment conditions. For example, the temperature is set at 60 to 220°C, the time is set for 2 to 8 hours, and the pressure is set at atmospheric pressure to about 5 kg/cm².

### Examples

The present invention will be detailed hereinafter with reference to Examples, in which "part" stands for "part by weight", and "%" stands for "% by weight", unless otherwise specified.

### Example 1

59.2 Parts of phthalic anhydride, 90 parts of urea, 9.9 parts of cuprous chloride, 0.178 part of ammonium molybdate, 112 parts of Hisol P (alkylbenzene solvent, supplied by Nippon Petrochemical Co., Ltd.) and 3.55 parts of the following dispersing agent were allowed to react under atmospheric pressure at 190 to 200°C for 4 hours. During the reaction, the reaction system was in a well mixed state, and the reaction proceeded smoothly.

Dispersing agent

H-(O-CH(C₆H₁₃)C₁₀H₂₀-CO)ₙ-NH-C₃H₆-N⁺(CH₃)₃-CH₃SO₄⁻

wherein n was 7 on average.

After the reaction, the solvent was removed by evaporation under reduced pressure, and the remaining reaction product was purified with hot water, with a dilute acid and with hot water, and dried to give 58.5 parts of a crude copper phthalocyanine (Crude-1, purity 98.1 %, yield 94.5 %). Crude-1 was formed into a pigment by a conventional method to give a β-form copper phthalocyanine (Pigment-1).

5.0 Grams of Pigment-1 was wetted with 5 milliliters of methanol and then dispersed in 200 ml of pure water and the mixture was stirred at 80°C for 60 minutes. The mixture was cooled to room temperature, pure water was added until the total amount of the mixture became 300 g, and the mixture was filtered. The resultant filtrate was measured for a surface tension to show 68.0 mN/m. This value was about the same as the value of surface tension in Comparative Example 2 to be described later. This value shows that the use of the above dispersing agent during the synthesis of a copper phthalocyanine does not cause a decrease in the surface tension and has no adverse effect on the emulsifiability of an offset ink in the preparation of an offset ink.

### Example 2

59.2 Parts of phthalic anhydride, 78 parts of urea, 9.7 parts of cuprous chloride, 0.592 part of ammonium molybdate, 118 parts of kerosene and 1.78 parts of the following dispersing agent were allowed to react, and the post treatment was carried out, in the same manner as in Example 1 to give 56.8 parts of a crude copper phthalocyanine (Crude-2, purity 97.0 %, yield 93.0 %). The reaction system was in a well mixed state as well as in Example 1.

Dispersing agent

CH₃(CH₂)₁₀CO-(O-CH(C₆H₁₃)C₁₀H₂₀-CO)ₙ-NH-C₂H₄-N(C₄CH₉)₂

wherein n was 7 on average.

Crude-2 was formed into a pigment in the same manner as in Example 1 to give a β-form copper phthalocyanine (Pigment-2). Pigment 2 was extracted with water in the same manner as in example 1, and the filtrate showed a surface tension of 68.7 mN/m. This value shows that the use of the above dispersing agent does not have an adverse effect on the emulsifiability.

### Example 3

58.8 Parts of phthalimide, 60 parts of urea, 10.1 parts of cuprous chloride, 0.355 parts of ammonium molybdate, 130 parts of kerosene and 2.94 parts of a dispersing agent of the following formula (1) were allowed to react, and the post treatment was carried out, in the same manner as in Example 1 to give 57.5 parts of a crude copper phthalocyanine (Crude-3, purity 97.6 %, yield 94.0 %). The reaction system was in a well mixed state as well as in Example 1.

Dispersing agent (Lubrizol LZ2153, supplied by Lubrizol, Ltd.)

A-(O-R¹-CO)ₙ-B (1)

wherein A was a polyester residue, n was 0, and B was a compound of the formula (2), 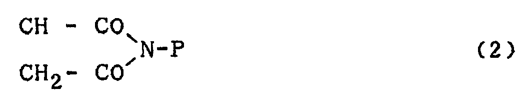 wherein P was a polyamine residue.

Crude-3 was formed into a pigment in the same manner as in Example 1 to give a β-form copper phthalocyanine (Pigment-3). Pigment 3 was extracted with water in the same manner as in example 1, and the filtrate showed a surface tension of 68.7 mN/m. This value shows that the use of the above dispersing agent does not have an adverse effect on the emulsifiability.

### Example 4

50.1 Parts of phthalic anhydride, 14.3 parts of sodium monochlorophthalate, 84 parts of urea, 9.9 parts of cuprous chloride, 0.258 parts of ammonium molybdate, 176 parts of Hisol P and 2.58 parts of the following dispersing agent were allowed to react, and the post-treatment was carried out, in the same manner as in Example 1 to give 57.0 parts of a crude, low-chlorinated copper phthalocyanine (Crude-4, purity 98.1 %, yield 91.1 %). The reaction system was in a well mixed state as well as in Example 1.

Dispersing agent

H-(CO-CH(C₆H₁₃)C₁₀H₂₀-CO)ₙ-B

wherein B was a compound of the formula (4) and n was 7 on average.

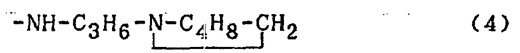

Crude-4 was formed into a pigment by a conventinal acid-paste method to give an α-form, low-chlorinated copper phthalocyanine (Pigment-4). Pigment-4 was clear and excellent in dispersibility, and an ink containing Pigment-4 was also excellent in resistance to dampening solution.

### Comparative Example 1

59.2 Parts of phthalic anhydride, 90 parts of urea, 9.9 parts of cuprous chloride, 0.178 parts of ammonium molybdate, 112 parts of Hisol P and 3.55 parts of sodium dodecylbenzenesulfonate were allowed to react, and the post-treatment was carried out, in the same manner as in Example 1 to give 56.8 parts of a crude copper phthalocyanine (Crude-5, purity 97.0 %, yield 93.0 %). The reaction system was in a well mixed state as well as in Example 1.

Crude-5 was formed into a pigment in the same manner as in Example 1 a β-form copper phthalocyanine (Pigment-5). Pigment 5 was extracted with water in the same manner as in example 1, and the filtrate showed a surface tension of 37.5 mN/m. This value shows that the use of the above dispersing agent decreases the surface tension of the pigment and impairs the emulsifiability of an offset ink.

Pigment-5 was washed with a 1 % sodium hydroxide aqueous solution repeatedly and extracted with water, and the filtrate was measured for a surface tension to show 45.3 mN/m. This value was insufficient and shows that the additive was not completely removed.

### Comparative Example 2

59.2 Parts of phthalic anhydride, 90 parts of urea, 9.9 parts of cuprous chloride, 0.178 part of ammonium molybdate and 112 parts of kerosene were allowed to react, and the post-treatment was carried out, in the same manner as in Example 1 to give 54.9 parts of a crude copper phthalocyanine (Crude-6, purity 97.1 %, yield 92.6 %). The reaction system was in a poor state where a gummy reaction intermediate and the solvent were separated from each other and the gummy reaction intermediate adhered to a reactor wall. Crude-6 was formed into a pigment in the same manner as in Example 1 to give a β-form copper phthalocyanine pigment (Pigment-6). Pigment-6 was extracted with water in the same manner as in Example 1, and the resultant filtrate was measured for a surface tension to show 69.2 mN/m. This value shows that when no surfactant is incorporated, a filtrate has a sufficiently high surface tension. That is, this value can be used as an index for excellence in emulsifiability.

According to the process of the present invention, the reaction system for the production of copper phthalocyanine, which is very heterogeneous in a conventional process, is improved even when a solvent having low dissolving power is used or when the amount of a solvent is decreased. Further, the viscosity increase can be prevented at the stage when a reaction intermediate is formed. As a result, the defective mixing, nonuniform heat transfer and the adhering of a reaction intermediate to a reactor wall can be overcome, and a copper phthalocyanine having a high purity can be produced at high yields.

Further, the process of the present invention takes into account the method of use of the produced copper phthalocyanine and the suitability for use of the produced copper phthalocyanine for the formation of a pigment, and when a pigment formed from the crude copper phthalocyanine pigment is used in an ink, the decrease in the surface tension of the pigment is prevented, and the pigment can be used without causing adverse effects on other suitability of the ink.

## Claims

1. A process for the production of a crude copper phthalocyanine pigment which process comprises heating phthalic acid and/or its derivative, a nitrogen source, a copper source and a catalyst in an inert solvent, wherein a dispersing agent of the formula (1) is added to the reaction system,
A-(O-R¹-CO)ₙ-B (1) (1)
wherein A is hydrogen, a saturated or unsaturated aliphatic group having 1 to 20 carbon atoms or a polyolefin residue, R¹ is a linear or branched aliphatic residue having up to 20 carbon atoms, 0≤n≤20, and when n = 0, B is a compound of the formula (2), 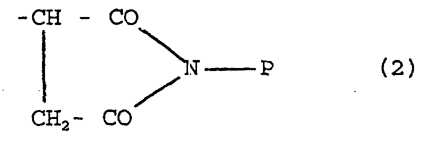 wherein P is a polyamine,
or when n ≠ 0, B is a compound of the formula (3),
-X-(Cₘ-H₂ₘ)-Q (3)
wherein X is -NH- or -O-, m is 0 to 6 and Q is -NR²R³ or -N⁺R²R³R⁴-Y⁻ in which each of R² and R³ is independently hydrogen or an aliphatic group having 1 to 6 carbon atoms or R² and R³ together form a ring containing N, R⁴ is methyl or ethyl and Y is a monovalent anion.

2. A process according to claim 1, wherein the dispersing agent is a compound of the following formula,
A-(-O-CH(C₆H₁₃)C₁₀H₂₀-CO)ₙ-NH-(CₘH₂ₘ)N⁺R²R³R⁴-Y⁻
wherein A is as defined in the formula (1), 0<n≼20, and m, R², R³, R⁴ and Y⁻ are as defined above.

3. A process according to claim 1, wherein the dispersing agent is a compound of the following formula,
A-(-O-CH(C₆H₁₃)C₁₀H₂₀-CO)ₙ-NH- (CₘH₂ₘ)NR²R³
wherein A is as defined in the formula (1), 0<n≤20, and m, R² and R³ are as defined above.

4. A process according to claim 1, wherein the dispersing agent is a compound of the formula (1) wherein A is a polyolefin residue, n is 0 and B is a compound of the formula (2).

5. A process according to any preceding claim, wherein the dispersing agent is added in an amount of from 0.001 to 0.15% by weight based on the reaction product.

6. A process according to any preceding claim, wherein the copper source is chosen from metal copper powder, copper chloride, copper oxide, copper sulphate, copper acetate and a complex of a copper salt with ammonia, urea or an amine.

7. A process according to any preceding claim, wherein the nitrogen source is added in an amount of at least 3 mol per mole or the phthalic acid and/or its derivative.

8. A process according to any preceding claim, wherein the catalyst is added in an amount of 0.001 to 0.02 parts by weight per part by weight of the phthalic acid and/or its derivative.

9. A process according to any preceding claim, wherein the inert solvent is added in an amount of 1 to 5 parts by weight per part by weight of the phthalic acid and/or its derivative.

10. A process for preparing an ink containing, as a pigment, a copper phthalocyanine, which process comprises:
(a) preparing a crude phthalocyanine pigment by a process according to any one of claims 1 to 9; and
(b) incorporating pthalocyanine pigment formed from the crude phthalocyanine pigment into an ink.

## Patentansprüche

1. Verfahren zur Herstellung eines Kupferphthalocyanin-Rohpigments, welches Verfahren das Erhitzen einer Phthalsäure und/oder ihres Derivats, einer Stickstoff-Quelle, einer Kupfer-Quelle und eines Katalysators in einem inerten Lösungsmittel umfasst, wobei ein Dispergiermittel der Formel (1) dem Reaktionssystem zugegeben wird,
A-(O-R¹-CO)ₙ-B (1)
worin A Wasserstoff, eine gesättige oder ungesättigte aliphatische Gruppe mit 1 bis 20 Kohlenstoffatomen oder ein Polyolefin-Rest ist, R¹ ein linearer oder verzweigter aliphatischer Rest mit bis zu 20 Kohlenstoffatomen ist, 0<n< 20 ist, und dann, wenn n = 0 ist, B eine Verbindung der Formel (2) ist, 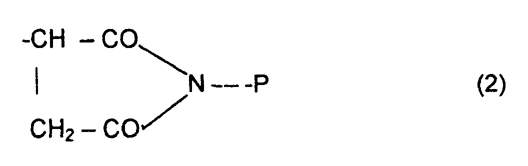 worin P ein Polyamin ist,
oder dann, wenn n ≠ 0 ist, B eine Verbindung der Formel (3) ist,
-X-(Cₘ-H₂ₘ)-Q (3)
worin X ist -NH- oder -O-, m ist 0 bis 6 und Q ist -NR²R³ oder -N⁺R²R³R⁴-Y⁻, worin jedes von R² und R³ unabhängig voneinander Wasserstoff oder eine aliphatische Gruppe mit 1 bis 6 Kohlenstoffatomen ist oder R² und R³ zusammengenommen einen Ring bilden, der N enthält, R⁴ Methyl oder Ethyl ist und Y ein einwertiges Anion ist.

2. Verfahren nach Anspruch 1, wobei das Dispergiermittel eine Verbindung der folgenden Formel ist
A-(-O-CH(C₆H₁₃)C₁₀H₂₀-CO)ₙ-NH-(CₘH₂ₘ)N⁺R²R³R⁴-Y⁻
worin A wie in Formel (1) definiert ist, 0<n<20, und m, R², R³, R⁴ und Y⁻ wie oben definiert sind.

3. Verfahren nach Anspruch 1, wobei das Dispergiermittel eine Verbindung der folgenden Formel ist
A-(-O-CH(C₆H₁₃)C₁₀H₂₀-CO)ₙ-NH-(CₘH₂ₘ)NR²R³
worin A wie in Formel (1) definiert ist, 0<n<20, und m, R² und R³ wie oben definiert sind.

4. Verfahren nach Anspruch 1, wobei das Dispergiermittel eine Verbindung der Formel (1) ist, worin A ein Polyolefin-Rest ist, n 0 ist und B eine Verbindung der Formel (2) ist.

5. Verfahren nach einem der vorangehenden Ansprüche, wobei das Dispergiermittel in einer Menge von 0,001 bis 0,15 Gewichtsprozent, bezogen auf das Reaktionsprodukt, zugegeben wird.

6. Verfahren nach einem der vorangehenden Ansprüche, wobei die Kupfer-Quelle gewählt wird aus Kupfer-Metallpulver, Kupferchlorid, Kupferoxid, Kupfersulfat, Kupferacetat und einem Komplex aus einem Kupfersalz mit Ammoniak, Harnstoff oder einem Amin.

7. Verfahren nach einem der vorangehenden Ansprüche, wobei die Stickstoff-Quelle in einer Menge von mindestens 3 Mol pro Mol der Phthalsäure und/oder ihres Derivats zugegeben wird.

8. Verfahren nach einem der vorangehenden Ansprüche, wobei der Katalysator in einer Menge von 0,001 bis 0,02 Gewichtsanteilen pro Gewichtsanteil der Phthalsäure und/oder ihres Derivats zugegeben wird.

9. Verfahren nach einem der vorangehenden Ansprüche, wobei das inerte Lösungsmittel in einer Menge von 1 bis 5 Gewichtsanteilen pro Gewichtsanteil der Phthalsäure und/oder ihres Derivats zugegeben wird.

10. Verfahren zur Herstellung einer Farbe, enthaltend, als ein Pigment, ein Kupferphthalocyanin, welches Verfahren umfasst:
(a) Herstellen eines Phthalocyanin-Rohpigments mittels eines Verfahrens nach einem der Ansprüche 1 bis 9; und
(b) Aufnehmen des aus dem Phthalocyanin-Rohpigment erhaltenen Phthalocyanin-Pigments in eine Farbe.

## Revendications

1. Procédé de production d'un pigment de phtalocyanine de cuivre brut, ledit procédé comprenant le chauffage d'acide phtalique et/ou de son dérivé, d'une source d'azote, d'une source de cuivre et d'un catalyseur dans un solvant inerte, dans lequel on ajoute un agent dispersant de formule (1) au système de réaction,
A-(O-R¹-CO)ₙ-B (1)
où A est l'hydrogène, un groupe aliphatique saturé ou insaturé ayant de 1 à 20 atomes de carbone ou un résidu polyoléfine, R¹ est un résidu aliphatique linéaire ou ramifié ayant jusqu'à 20 atomes de carbone, 0≤n≤20, et quand n = 0, B est un composé de formule (2), 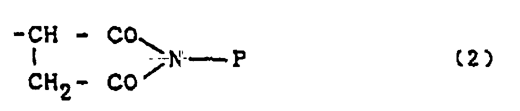 dans laquelle P est une polyamine, ou quand n ≠ 0, B est un composé de formule (3),
-X-(Cₘ-H₂ₘ)-Q (3)
dans laquelle X est -NH- ou -O-, m vaut de 0 à 6 et Q est -NR²R³ ou -N⁺R²R³R⁴-Y⁻ où chacun de R² et R³ est indépendamment l'hydrogène ou un groupe aliphatique ayant de 1 à 6 atomes de carbone, ou R² et R³ forment ensemble un cycle contenant N, R⁴ est méthyle ou éthyle, et Y est un anion monovalent.

2. Procédé selon la revendication 1, dans lequel l'agent dispersant est un composé ayant la formule suivante,
A-(-O-CH(C₆H₁₃)C₁₀H₂₀-CO)ₙ-NH-(CₘH₂ₘ)N⁺R²R³R⁴-Y⁻
dans laquelle A est comme défini dans la formule (1), 0<n≤20, et m, R², R³ et Y⁻ sont comme définis ci-dessus.

3. Procédé selon la revendication 1, dans lequel l'agent dispersant est un composé ayant la formule suivante,
A- (-O-CH(C₆H₁₃)C₁₀H₂₀-CO)ₙ-NH-(CₘH₂ₘ)NR²R³
dans laquelle A est comme défini dans la formule (1), 0<n≤20, et m, R² et R³ sont comme définis ci-dessus.

4. Procédé selon la revendication 1, dans lequel l'agent dispersant est un composé de formule (1) dans laquelle A est un résidu polyoléfine, n vaut 0 et B est un composé de formule (2).

5. Procédé selon l'une quelconque des revendications précédentes, dans lequel on ajoute l'agent dispersant en une quantité de 0,001 à 0,15 % en poids par rapport au produit de réaction.

6. Procédé selon l'une quelconque des revendications précédentes, dans lequel on choisit la source de cuivre parmi une poudre de cuivre métallique, le chlorure de cuivre, l'oxyde de cuivre, le sulfate de cuivre, l'acétate de cuivre et un complexe d'un sel de cuivre avec de l'ammoniac, de l'urée ou une amine.

7. Procédé selon l'une quelconque des revendications précédentes, dans lequel on ajoute la source d'azote en une quantité d'au moins 3 moles par mole de l'acide phtalique et/ou de son dérivé.

8. Procédé selon l'une quelconque des revendications précédentes, dans lequel on ajoute le catalyseur en une quantité de 0,001 à 0,02 partie en poids par partie en poids de l'acide phtalique et/ou de son dérivé.

9. Procédé selon l'une quelconque des revendications précédentes, dans lequel on ajoute le solvant inerte en une quantité de 1 à 5 parties en poids par partie en poids de l'acide phtalique et/ou de son dérivé.

10. Procédé de préparation d'une encre contenant, comme pigment, une phtalocyanine de cuivre, ledit procédé comprenant :
(a) la préparation d'un pigment de phtalocyanine brut au moyen d'un procédé selon l'une quelconque des revendications 1 à 9 ; et
(b) l'incorporation d'un pigment de phtalocyanine formé à partir du pigment de phtalocyanine brut dans une encre.
